# EUROPEAN PATENT SPECIFICATION

(11) **EP 1 754 084 B1**
(45) Date of publication and mention of the grant of the patent: **02.07.2008**
(21) Application number: 05731967.5
(22) Date of filing: 03.05.2005
(51) Int. Cl.: G02B 3/14, G02B 26/02

(54) **ELECTROWETTING CELL AND METHOD OF MANUFACTURING THEREOF**
ELEKTROWETTING-ZELLE UND VERFAHREN ZU DEREN HERSTELLUNG
CELLULE D'ELECTROMOUILLAGE ET PROCEDE DE FABRICATION DE LADITE CELLULE

(30) Priority: 07.05.2004 EP 04101996; 19.11.2004 EP 04105940; 24.03.2005 EP 05102398
(43) Date of publication of application: 21.02.2007
(73) Proprietor: Koninklijke Philips Electronics N.V., 5621 BA Eindhoven (NL)
(72) Inventor: VAN DER MEER, Piet, NL-5656 AA Eindhoven (NL); TIJBURG, Roel, R., M., NL-5656 AA Eindhoven (NL); KERKHOF, Klaas, W., NL-5656 AA Eindhoven (NL); VERHOECKX, Godefridus, J., NL-5656 AA Eindhoven (NL); VAN DER ZANDEN, Wilhelmus, A., M., NL-5656 AA Eindhoven (NL); WEEKAMP, Johannus, W., NL-5656 AA Eindhoven (NL)
(74) Representative: Reints Bok, Wouter
(86) International application number: PCT/IB2005/051435
(87) International publication number: WO 2005/109043

(56) References cited:
- WO-A-03/071335
- PATENT ABSTRACTS OF JAPAN vol. 2002, no. 10, 10 October 2002 (2002-10-10) & JP 2002 162506 A (CANON INC), 7 June 2002 (2002-06-07) cited in the application

## Description

The invention relates to an electrowetting cell comprising a body section provided with a substrate and at least one side wall, which substrate and side wall jointly define a cavity containing electrowetting fluids and further comprising at least one end section secured to the body section.

The invention also relates to a method of manufacturing an electrowetting cell comprising a body section provided with a substrate and a side wall, which substrate and side wall jointly define a cavity containing a first and a second electrowetting fluid.

Electrowetting cells are cells in which light is refracted by a meniscus between two immiscible fluids. One of the two fluids is electrically insulating and the other is electrically conducting. The shape of the meniscus is variable under the influence of a voltage between two electrodes, one of which is connected to the electrically conducting fluid and the other to a surface of the body. Such cells are known and can for instance be applied as lenses or displays. In the case of the application of a cell, there is a light-path through the body section.

Such an electrowetting cell is for instance known from WO-A 03/069380. This patent application discloses a lens in which an inner surface of the at least one side wall is covered by a hydrophobic fluid contact layer. When no voltage is applied, the wettability of the fluid contact layer with respect to the electrically insulating fluid differs from the wettability of the fluid contact layer with respect to the electrically conducting fluid. Under influence of the applied voltage a change of the wettability occurs. This leads to a change of a contact angle of the meniscus at a line of contact between the fluid contact layer and the fluids, whereby the shape of the meniscus is adjusted. Hence, the shape of the meniscus is dependent on the applied voltage.

As the electrowetting cell has optical properties and includes fluids, it is of primary importance for an adequate operation that a complete filling of the cell is achieved and that no fluid can leak out of the cell after closing the cell. The cell disclosed in the prior art does not give any solution how to achieve such a complete filling and a prevention of fluid leakage.

In the publication of the application WO 03/071335, a display device is described that is provided with a two dimensional array of electro wetting cells in one array arranged in one substrate to provide for displaying parameters, such as switching between 2D and 3D displaying whereby a large number of electro wetting cells are provided in the substrate up to the same number as the number of pixels of the display providing for coverage of all the pixels of the display that are viewable. In this device of D1, the array of electro wetting cells as a whole is integrated in the display AND all the cells in the array are formed as holes in one subsrate. Such a device has a significant disadvantage in that it can not be used as a lens for depicting an image to or from a large numer of pixels by means of one lare enough electrowetting cell.

It is therefore a first object of the invention to provide an electrowetting cell of the kind mentioned in the opening paragraph, which can be completely filled and that is protected against fluid leakage after closing of the cell.

It is a second object to provide a method of the kind mentioned in the opening paragraph, with which the complete filling can be achieved in an industrially viable manner.

The first object is achieved in that the at least one side wall of the body section comprises an inner wall and an outer wall, a portion of which end section is part of the inner wall, thus securing the end section and the body section, and which outer wall is provided with extensions extending at a first side and a second, to the first opposed side of the inner wall.

The second object is achieved in a cell with an inner and an outer wall, said outer wall having a first and second extension extending at opposite sides of the inner wall, which method comprises the steps of:
- providing an outer wall and a substrate, resulting in the cavity;
- filling the cavity with the first and the second electrowetting fluid;
- providing the end section in the cavity such that it is immersed in at least one of the fluids at a desired distance to the substrate, portions of the substrate and the end section and optionally an intermediate spacer forming the inner wall; and
- securing the end section to the body section in that the first extension of the outer wall is positioned on top of the end section.

The solution of the present invention is a cell with a double wall. The outer wall provides stability and adequate sealing, whereas the inner wall is built up from the constituent elements that are assembled consecutively. Due to the consecutive assembly and the double wall, the electrowetting fluids can be provided before the end section. As a result, the end section can be immersed in the fluid, practically the fluid with the lowest density. Some fluid will flow to above the end section, but is nevertheless kept within the outer wall. The immersion leads to the required complete filling. An adequate sealing is then arrived at, in that the outer wall is present at the opposite sides of the inner wall. The outer wall of the package will then comprise only two major materials, that can be attached to each other in a good manner. A suitable combination is metal and glass.

The substrate could be part of the outer wall, but is preferably a separate part of which an portion is part of the inner wall. A spacer may be present between the portions of the substrate and the end section. This is suitable but not necessary. The advantage of such spacer is that it can be provided with any desired surfacial coating, such as the above mentioned fluid contact layer. Advantageously, the spacer is provided with a gap at its bottom side. This allows a reduction of the height of the cell.

Several embodiments can be envisaged for the first extension that is provided on top of the end section. It may for instance be a flexible extension of the outer wall. It may alternatively be a metal layer that is positioned through a deposition technique, probably with the help of a tool exerting pressure.

In a preferred embodiment, the first extension is a clamping body that is assembled on top of the end section as a separate component and - simultaneously or consecutively - connected to the outer wall. This allows an efficient assembly method. Reliable connection can be realized in both mechanical and chemical means, such as locking features, additional clamps, adhesive layers and sealing layers. Advantageously, use is made of a joining and protective layer that is grown on said surfaces. The grown layer is bonded to the surfaces chemically. It has the same coefficient of thermal expansion and it is not sensitive for inelastic and irreversible expansion under the influence of temperature. The grown layer can be grown to a desired thickness, therewith smoothening out gaps and height differences. Moreover, such a grown layer is quite inert, particularly if provided with an oxide, that may be a native oxide. Finally, the grown layer is not sensitive to attack by any of the electrowetting fluids and does not have an open or porous structure that would allow diffusion of molecules. With such a sealing, particularly together with a substrate and end section of glass, the resulting cell is closed hermetically.

A particularly suitable technique hereto is electroplating. This technique has the advantage that it can be applied at bulk level, by immersing the complete cell into a bath. Such an immersion of the complete cell moreover has the advantage that the grown layer extends on the complete outer wall and on both extensions at either side of the inner wall. Herewith the clamping character of the outer wall is strengthened.

In a further embodiment, a first and a second electrode that are in contact with at least one of the electrowetting fluids are defined at opposed sides of the cavity at the substrate and at the end section. At least two electrodes are needed in the electrowetting cell so as to apply the voltage needed to set the shape of the meniscus. Such electrodes can be applied at the inner walls, at opposite sides of the meniscus. In this embodiment however, the electrodes are present at the end section and at the substrate. This actually allows the use of a metal encapsulation without an isolated connection for one of the electrodes.

Preferably, the substrate is provided with an aperture, at an end of which said electrode is present. The electrode may be present both at a surface of the substrate facing the meniscus and at an opposite surface facing away from the meniscus. The latter modification is most preferred, as there is no need to fill said aperture with metal herein: the fluid fills the aperture. Moreover, the manufacture of this electrode can be integrated with the provision of metal strips that are used for the attachment of the outer wall to the substrate, and hence provide an adequate sealing.

It is preferred that the package is provided with a volume expansion member. Such an expansion member is for instance known from JP-A 2002/162506. This known package comprises a specific chamber that is present adjacent to the substrate, and is separated from the cell with a flexible cover. On increase of the pressure in the cell, the flexible cover may be deformed or even be stretched out, so as to form a curved surface extending into the said chamber. The invention offers the possibility to locate such a chamber between the inner wall and the outer wall.

A more preferable embodiment of the volume expansion member is a flexible membrane that is part of the end section. In this manner, a larger part of the end section - that is: the part that is present in the light path - is moved. Hence, a substantial volume increase can be compensated. The flexible membrane is particularly ring-shaped. The end section is thus divided into an outer edge, a membrane and an inner portion. The standard position of the end section need not to be planar herein. As will be explained with respect to the Figures, it is particularly such that the outer edge is pushed downwards under the pressure of the clamping body. This moreover results in a pressurized package. Although not preferred, it is not excluded that the outer edge portion of the end section comprises an other material than the inner portion.

The membrane is made of metal by far preference. Such a material withstands the fluids effectively. It has the additional advantage that the membrane can be used as one of the electrodes of the cell. If the connection between clamping body and outer wall is provided by electroplating or the like, the membrane will be provided with a metal layer too. A suitable thickness of the membrane layer that has sufficient stability on the one hand and sufficient flexibility on the other hand, is in the order of 5-30 microns, and more preferably between 15 and 25 microns. This is also dependent of the material of the membrane. In order to limit the thickness of the membrane, it may be provided with an insulating coating.

The substrate and the end section are preferably glass plates. Glass is inert against the electrowetting fluids. It can be treated with techniques such as powder blasting, and metal layers can be attached to it. If desired, one or both glass plates may be provided with coatings and surface layers, including IR-coatings, UV-absorption coatings, antireflection coatings, but also lenses. Such lenses can be made of surface layers with the replica technique. Alignment features may be included in such replica made surface layers. This allows a proper alignment of the cell with further lenses at the bottom and the top side.

If the cell of the invention is used as a lens, it is suitable assembled with further lenses to obtain a desired path. It is not excluded that two electrowetting lenses are part of the assembly; in fact this provides zoom properties. An alternative embodiment is however a stacked electrowetting lens. This stacked electrowetting lens can be suitable made with the method of the invention.

In a first embodiment of stacked cell manufacture, the substrate is present located in the middle of the stacked cell construction. A first assembly and filling takes then place on the one side of the substrate, and a second assembly and filling takes place on the opposed second side after finalizing the assembly and filling at the first side. Preferably both opposite end section are provided with flexible membrane for compensation of volume expansion. The outer wall is provided in this construction with an extension to support the substrate, half way the stacked cell.

In a second embodiment of the stacked cell manufacture, the two cells are provided within the outer wall one after the other. The end section of the first cell may be the substrate of the second cell, but that is not necessary. Most simply, a spacer is provided instead of the clamping body. On this spacer, that may well be connected to the outer wall by electroplating, a further substrate and the further elements of the second cell are provided consecutively. Such a construction moreover allows that the electrodes are located in the substrates and the end sections without the need for mutual coupling.

Instead for stacking of several electrowetting cells, the outer wall may be applied for stacking of one electrowetting cell and further optical and/or non-optical elements. In addition to separate lenses and filters, it is envisaged that an image sensor is assembled in this manner, separated from the electrowetting lens at a desired distance with any spacer or the like. Such an integration is most effectively with an image sensor in which the bond pads are located at a surface opposite to the optically active surface. Alternatively, the image sensor can be assembled on top of an interposer substrate, that is provided with through-holes so as to bring the contacts to a side opposite from the optically active surface. The use of interposer substrates is known per se in the art of semiconductor packaging.

It is an advantage of the method of the invention that it can be carried out at a wafer-level or a bulk level. The outer wall may be part of a plate, such as a printed circuit board with apertures. It can be separated into individual packages only after the filling and encapsulating steps. However, even if the manufacture of the cells is carried out individually, the electroplating steps can occur in a bath, allowing the simultaneous electroplating of a plurality of devices.

In a further preferred embodiment, at least one of the overlapping surfaces of the outer wall and the inner wall or the substrate or end section comprises a sealant for sealing the overlapping part under pressure. An advantage thereof is that the cell is being sealed during the assembly thereof. In other words, the cell is sealed while the closing extension is applied to the cell. It is to be kept in mind that leakage of fluids has to be prevented all around the overlapping surfaces. The sealing of this embodiment prevents leakage of fluids through passages that are formed by irregularities in the adjacent surfaces. A further advantage of this embodiment is that, because leakage is prevented after assembly, the surface of the exterior of the cell will remain free of liquids migrating from the inside after cleaning of the cell. Therefore, the application of the, preferably, metal layer as described in the above is not hampered by newly leaking fluids.

Advantages of a sealant comprising an organic composite such as plastic or rubber is that such materials are easily deformed and or pressed into areas wherein the adjacent surfaces are further away from each other, which areas are most prone to leakage. Preferably the sealant has electrically conductive properties which enables the process of electroplating by means of the positing technique such as electro galvanizing directly onto the sealant. Applying the electroplating directly on the sealant speeds of up the electroplating process over the gap between adjacent wall parts.

The invention is further related to a manufacturing method and a cell of the kind mentioned in the opening paragraph, in which a hermetic sealing is provided. This is achieved in that the end section is attached to the body section with a metal layer that is applied on a surface of both the end section and the joint section. As is explained above, the application of a metal layer will lead to a hermetic sealing. A clamping is achieved if the metal layer, or the construction of which the metal layer is part extends on both sides of the cell. A preferred application method is electroplating, but other methods such as sol-gel deposition of metal, sputtering or chemical vapor deposition, or combinations of such deposition methods, are not excluded. The metal layer will suitably be attached to metal parts at the surface of the end section and at the surface of the body section.

The cell may be used as a lens for use in a camera, in an optical recording apparatus or any other optical equipment. The cell may be assembled with further lenses, to obtain an optical path as needed, or even to obtain a zoom lens. Alternatively, the cell is used as a display, in which case only one of the substrate and the end section needs to be optically transparent. The cell may be further used as a sensor.

These and other aspects of the cell and the method of the invention will be further elucidated with reference to the Figures, in which:
Fig. 1 shows a diagrammatical cross-sectional view of the cell of the invention, in which only the left part is depicted;
Figs. 2-7 show diagrammatic cross-sectional views of consecutive stages in the manufacturing of the end section used in the cell;
Figs. 8-16 show diagrammatic cross-sectional views of consecutive stages in the method of manufacturing of the cell, in which Figs. Only the left part of the cell is depicted.
Fig. 17 shows a diagrammatical cross-sectional view of a second embodiment of the cell of the invention.
Figs. 18-19 shows a diagrammatical cross-sectional view of a third embodiment of the cell of the invention.

The Figures are diagrammatic and not drawn to scale. The same reference numbers in different Figures refer to like parts.

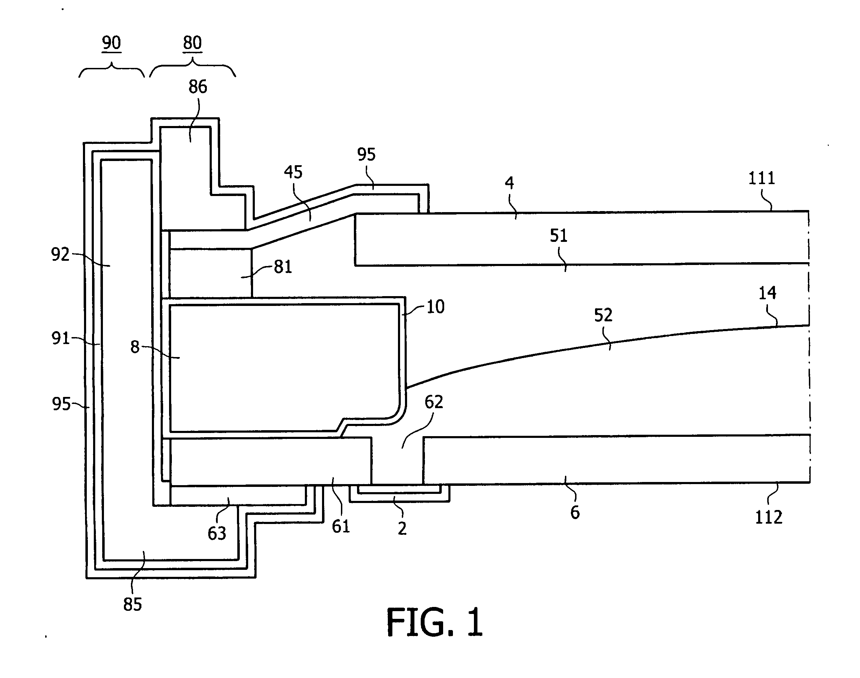

Fig. 1 shows an embodiment of an electrowetting cell 15 according to the invention. In this Fig. 1 only a partial cross-sectional view is shown, i.e. only the left part of the cell 15. The cell 15 is however built up symmetrically, such that the non-shown right part is the mirror of the left part. The lens includes fluid chamber, with a first fluid 51 and a second fluid 52 that are non-miscible and contact each other over a meniscus 14. The first fluid 51 is in this example a silicone oil, an alkane or another suitable electrically insulating fluid. The second fluid 52 is in this example water containing a salt solution or another suitable electrically conducting fluid. The sides of the chamber are provided with an electrically insulating layer 8 and a fluid contact layer 10, for instance parylene.

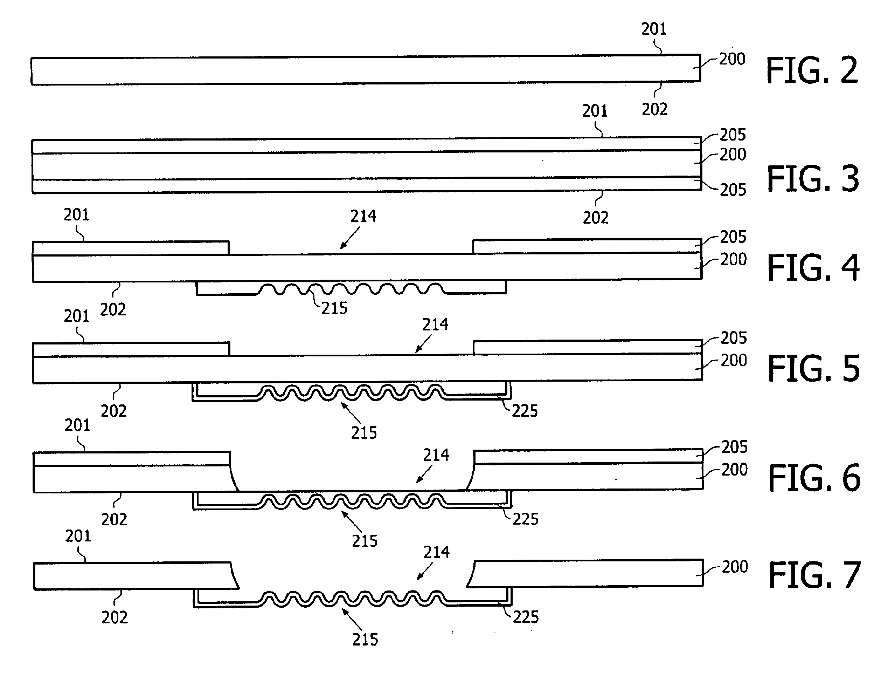

According to this embodiment, the body section 17 comprises an inner wall 80 and an outer wall 90, and - at the second side 112 of the cell 15 - the second cover plate 6. The inner wall 80 comprises an electrically insulating member 8 that is coated with a fluid contact layer 10. The inner wall 80 also comprises a portion of the end section 4. This end section (or first cover plate) 4 comprises a ring-shaped glass member 81 that is through an expandable joint 45 connected to an inner portion. In a preferred embodiment, this ring-shaped glass member 81 and the inner portion of the end section 4 are manufactured from a single glass plate, as will be explained with reference to Figs. 2 to 7. The inner wall 80 further comprises the end 61 of the second cover plate 6. This second cover plate 6 is provided with a through hole 62, an electrode 2, and a metallization 63. In an alternative embodiment, the plate 6 may be replaced by a construction similar or identical to that at the first side 111 of the cell 15, i.e. a ring-shaped glass member, an expandable joint and a cover plate.

These three sections of the inner wall 80 - the ring-shaped glass member 81, the - also ring-shaped - insulating member 8 and the end 61- are clamped between a protrusion 85 of the outer wall 90 and a ring-shaped closing member 86. The closing member 86 is herein a piece of metal, but can be anything with an electrically conducting surface. The outer wall 90 comprises an inner core of plastic or other material 92 that is provided with a metallized surface 91. This metallized surface 91 also circumferes the metallization 63 of the second cover plate 6. In this manner, a mechanically stable connection is provided.

The inner wall 80 and the outer wall 90 are attached to each other, as well as to the joint 45 and the end section 4, in that a sealing layer 95 is present around it. The sealing layer 95 can be made of a suitable material. Polymeric coating of rubber, epoxy or the like, as are known per se as protective coating may be used. It is however preferred that the sealing layer 95 comprises a metal. This allows the provision of a package that is hermetical and not prone to diffusion of air, water or fluid. A particularly preferred method for the provision of this metal sealing layer 95 is electroplating. This method can be carried out at three-dimensional surfaces, e.g. in a bath.

Figs. 2 to 7 show in schematic cross-sectional views consecutive steps in a method of manufacturing of the substrate 200 with an integrated membrane 210, to be applied as expandable joint 46. Fig. 20 shows the substrate 200, with a first surface 201 and an opposed second surface 202. The substrate 200 is in this example a glass plate with a suitable thickness, for instance in the order of 0.1 mm.

Fig. 3 shows the substrate 200, after that a photoresist 205 is applied at both surfaces 201, 202. Photoresist materials are known per se in the art.

Fig. 4 shows the substrate 200 after patterning and developing the photoresist 205. The patterning at the first side 201 results in an aperture 214. The patterning at the second side 202 has resulted therein, that also the surface 215 of the photoresist 205 is given a three-dimensional structure. This surface 215 is in this example in the form of an undulating surface. This surface structure can be provided with forging or another manner of mechanical deformation. Alternatively, use is made of advanced photolithographical techniques. In an even further embodiment, use is made of a molding technique to provide the photoresist layer 205 in the desired shape. As will be understood, no specific photoresist material is needed in such a case.

Fig. 5 shows the substrate 200 after that a membrane layer 225 is applied. The membrane layer comprises for instance a metal with some elasticity, although any other material is suitable, as long as it is compatible with the photoresist layer 205. Many metals turn out to have sufficient flexibility if applied as a thin layer. Examples include gold, copper, nickel, aluminum, as well as suitable alloys thereof. A metal layer may be applied with a suitable deposition technique, such as sputtering, chemical vapor deposition and also wet-chemical techniques. In this example, the membrane layer 225 is shown to be patterned, but that is not necessary.

Fig. 6 shows the substrate 200 after that it has been patterned through the patterned photoresist 205 at the first side 201. In the case of a glass plate 200 the technique of power blasting can be applied advantageously, which however does not exclude any other technique such as etching.

Fig. 7 shows the substrate 200 after that the photoresist 205 is removed, and a substrate 200 with an integrated membrane 220 results. As will be clear, the substrate 200 may extend in lateral directions. The membrane 220 may have any suitable shape. Particularly preferred is a ring-shape. The substrate may contain a plurality of membranes, and be suitable for wafer-level processing in a further step, or be separated. Such a separation step could also be applied before the removal of the photoresist 205. Although not shown here, it is not excluded that the substrate comprises further layers at its first or second side 201, 202. If a semiconductor substrate is used as the substrate 200, semiconductor elements such as diodes and transistors or trench capacitors may be defined herein.

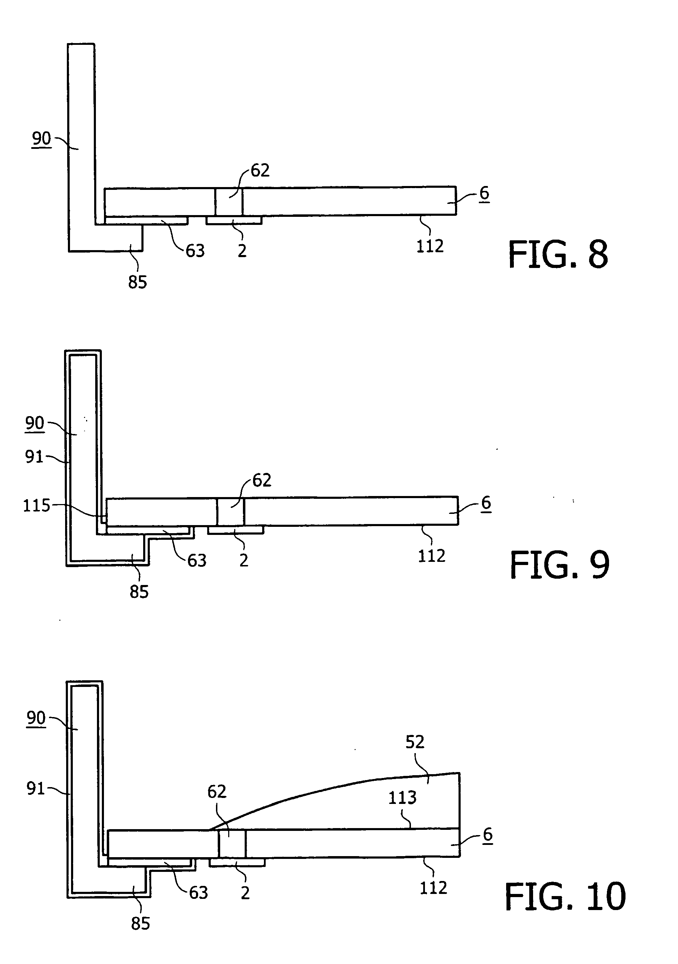

Figs. 8 to 16 show diagrammatical cross-sectional views of the method of manufacturing the electrowetting cell 15. Shown here is the manufacture of the embodiment of Fig. 1, but modifications and alternatives are possible within the scope of the present invention.

Fig. 8 shows the first step in the assembly. Herein, a glass substrate 6 is provided into a ring-shaped member 90. The ring-shaped member 90 acts as outer wall, and is provided with an electrically conducting surface. It is not necessary though allowed that the complete surface is electrically conducting. The member 90 is provided with an extension 85, that is present at a first side 112 of the substrate 6, and is in contact with a adhesion layer 63 of the substrate 6. The adhesion layer 63 is here a metal, such as copper. An electrode 2 is present at the same first side 112 of the substrate 6. This electrode 2 covers an aperture 62 in the substrate 6. The aperture 62 may be filled with electrically conducting material, but that is not the case in this example. The aperture 62 is - contrarily to for instance the outer wall 90 - not ring-shaped, but provided locally only. Instead of glass use can be made of another material. In case that the cell is not a lens, there is no need that the substrate is optically transparent. In order to keep the substrate 6 and the outer wall attached, use is for instance made of an adhesive layer.

Fig. 9 shows the result after a second step in the assembly. Herein, the substrate 6 and the outer wall 90 are connected to each other with a metal layer 91. This metal layer 91 is suitable provided with electroplating in a bath. The metal layer 91 extends around the outer wall 90, and is connected to the adhesion layer 63 of the substrate. The connection is present not only at the first side 112 of the substrate, but also at a side face 115. Shown here, but not in further Figures is the fact that the electrode 2 will be provided with an electroplated layer as well. The position of this electrode 2 is chosen such that no bridge is formed between the electrode and the outer wall. An insulating coating may be provided at the electrode 2 in order to prevent the thickening thereof.

Fig. 10 shows the result after that an electrically conducting fluid 52 is provided into the outer wall 90 and on the second side 113 of the substrate 6. The fluid 52 is in this example an aqueous salt solution. Alcohols and the like may be used as additional solvents. The fluid extends into the aperture 62, therewith making contact to the electrode 2. The electrode 2 acts at the same time as a closure of the cell.

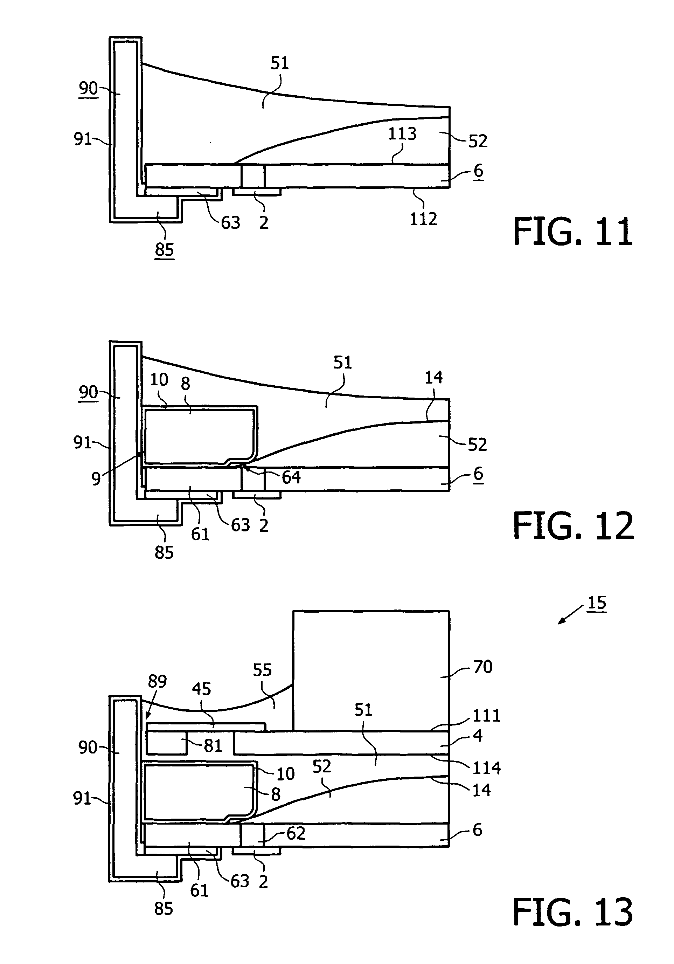

Fig. 11 shows the result after the provision of the electrically insulating fluid 51. This is an oil, for instance an alkane or a silicone oil. In view of its lower density, it is provided after the electrically conducting fluid 51. The shown shapes of the meniscus and the adhesion to the second side 113 of the substrate 6 are purely diagrammatical and do not necessarily correspond to any physical effect.

Fig. 12 shows the result after the insertion of a spacer 8. This is in this case a ring-shaped electrically insulating member 8 that is provided with a fluid contact layer 10 of parylene. The spacer 8 has a surface 9 that may have a modified surface structure or layer for proper adhesion to the electroplated layer 91 of the outer wall 90. This surface structure or layer can be of any chemical kind, but also mechanical, such as a locking feature. Additionally, the spacer 8 is provided with a gap 64. This gap 64 has as a first advantage that the electrode 2 can be provided below this spacer 8. Hence, the electrode 2 is located outside the light path, which reduces the diameter of the cell. A second advantage of the gap is a modification of the angle of the meniscus 14 between the electrically conducting fluid 52 and the electrically insulating fluid 51. As a result, the minimum thickness of the cell is reduced. The spacer 8 forms with an outer edge 61 of the substrate part of the inner wall.

Fig. 13 shows the cell 15 after a sixth step in the manufacturing. This step involves the assembly of the end section 4. The end section 4 includes an inner portion, a membrane 45 and an outer portion 81. A pressure tool 70 is provided at a first side 111 of the end section 4. Preferably, the end section 4 is provided with a layer of the electrically insulating fluid at its second side 114 before the actual assembly. This ensures that no air bubbles will be formed during the assembly. The end section 4 is immersed in the fluid 51 during the assembly. As a result thereof, a surplus layer 55 of the fluid is formed at the first side of the end section. The electrically insulating fluid 51 is able to flow from the second side 114 to the first side 111 of the end section 4, as a narrow channel is left between the outer portion 81 and the outer wall 90.

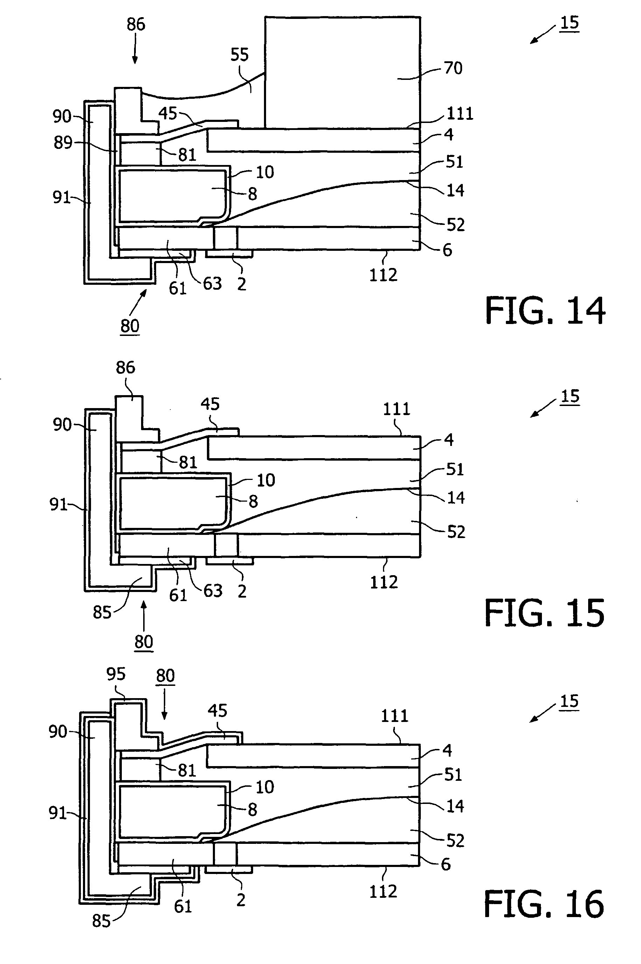

Fig. 14 shows the cell 15 after that the outer portion 81 of the end section 4 is secured to the body section. This body section comprises in fact both the spacer 8 and the outer wall 90. This is carried out by insertion of a clamping body 86. That clamps and/or puts the outer portion 81 downwards to the spacer 8. As a result the membrane 45 is put into a slightly bent position. The clamping body has a surface that is in contact with the electroplated surface layer 91 of the outer wall 90. It is preferably provided with one or more locking features. If desired, it may be designed to extend into the channel 89 between the outer portion 81 and the outer wall 90. In this operation, the inner wall 80 is formed, constituted by the adhesion layer 63, the outer portion 61 of the substrate 6, the spacer 8, the outer portion 81 of the end section 4 and the clamping body 86.

Fig. 15 shows the cell 15 after removal of the tool 70 and the surplus 55 of the electrically insulating fluid 51. The removal step is followed by a cleaning step, so that the surfaces of the clamping body 86 and the membrane 45 are sufficiently clean for subsequent steps.

Fig. 16 shows the cell 15 after the last important step in the manufacture. In this step, the connection between the clamping body 86 and the outer wall 90 is strengthened by the provision of a sealing layer 95. The sealing layer 95 is preferably provided with electroplating in a suitable bath. Alternatively, it may be any other protective layer known per se in the art, such as an epoxy-based layer. The sealing layer 95 extends in this example to the membrane 45 but that is not essential. Preferably, the sealing layer 95 is provided in a suitable thickness so as to fill any corners and provide a smoothened outer surface. The sealing layer 95 extends in this example from the first side 111 of the end section to the first side 112 of the substrate. This is advantageous, in that it therewith has a clamping character as well, and unifies the outer wall 90 with its extensions 85, 86.

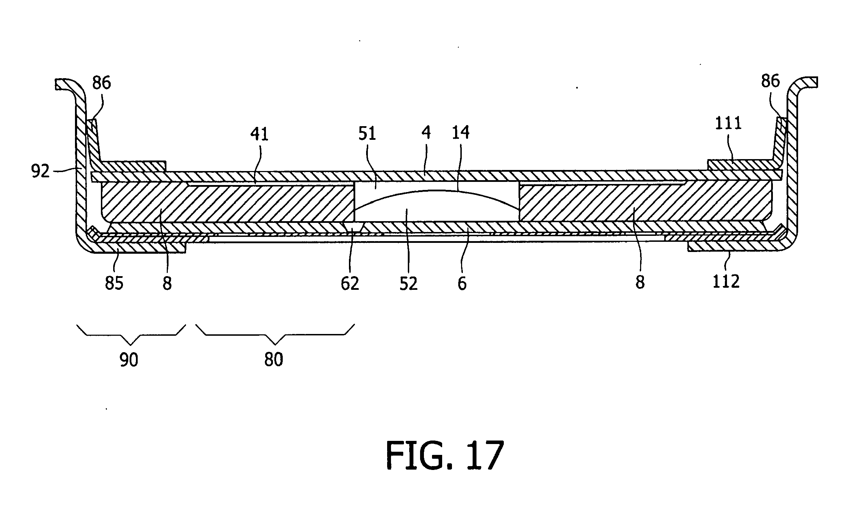

Fig. 17 shows a diagrammatical, cross-sectional view of a second embodiment of the cell of the invention. Not shown in this embodiment are any electroplated sealing layers that cover the extension 85 of the outer wall 80. In this embodiment, the core 92 of the outer wall is a metallic tray, which inherently comprise the protrusion 85. The second cover plate 6 with the through-hole 62, the body member 8 and the first cover plate 4 are herein assembled in the manner described with reference to Figs. 8 to 16. The body member 8 will generally operate as one of the electrodes, and it is for instance connected to the tray 92, that acts as a contact.

The first cover plate 4 is herein a continuous plate that is chosen to be sufficiently thin so as to be bendable under stress. In this example, use is made of a plate of glass. A cavity 41 is present between the body member 8 and the first cover plate 4. Under expansion of at least one of the fluids 51,52 - particularly at a temperature increase - the first cover plate 4 will bend so as to enlarge the volume in the cell. Under shrinkage of at least one of the fluids 51,52 the first cover plate will bend so as to diminish the volume in the cell. Since the electrically insulating fluid 51 is preferably an oil and has a larger coefficient of thermal expansion than the aqueous second fluid 52, it is preferably that the bendable first cover plate 4 is present at the side of the electrically insulating fluid 51.

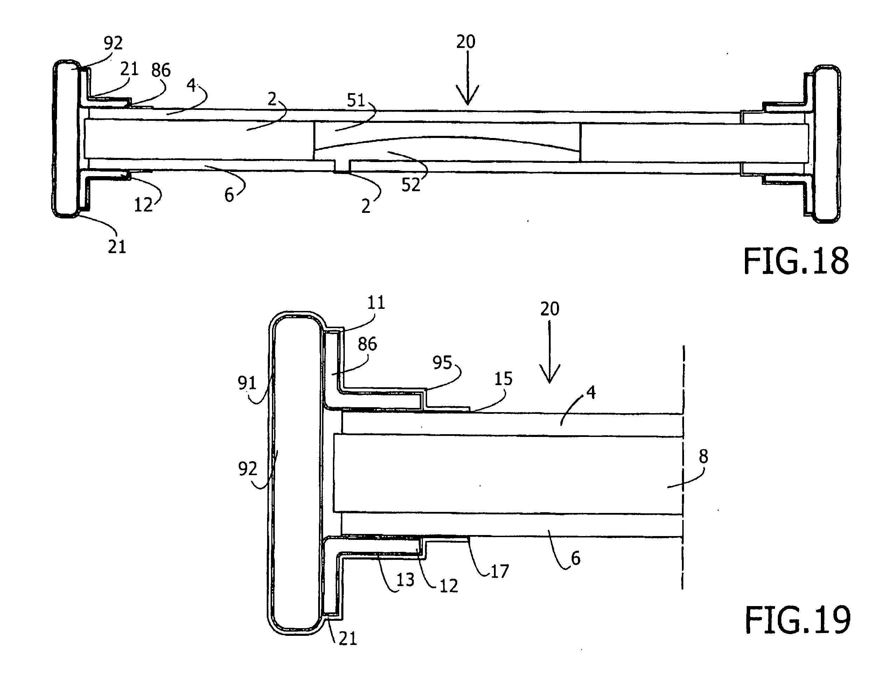

Fig. 18 shows a further embodiment of the electrowetting cell according to the present invention. The left side of the embodiment is shown in greater detail in Fig. 19. In this embodiment, the outer wall is formed by a cylindrical wall part 92 as well as to ring shaped closing members 86.12. Between the ring shaped closing members 86.12, to glass plates 4.6 and an annular or ring shaped insulating member 8 are enclosed in a manner similar to the other embodiments.

Before the assembly of this embodiment, the cylindrical wall part 92 is provided with a layer 91 comprising niflon. Niflon is a composite of Teflon and nickel which composite is electrically conductive. Another example of such a composite comprises Teflon and copper. Because such a layer is electrically conductive, and the final metallic layer 95, which is also applied in the other embodiments, can directly grow onto the niflon layer 91 when the use is made of a plating technique based on electricity such as electro galvanizing. Also the annular members 12,86 are provided with niflon layers 11,13.

The embodiment is assembled as follows. The assembly is started with just the cylindrical wall part 92. The ring shaped closing member 12 is inserted in to the cylindrical wall part. On top of the ring shaped closing member 12, the glass plate or substrate 6 is attached by means of an adhesive. On top of the glass plate or substrate 6, the annular or ring shaped insulating member 8 is placed. Then the first and second liquids are provided into the cavity and the cover plate is placed on top of the liquids in a manner similar as described with the earlier embodiments.

The sealant or niflon layer has advantages in that the materials are pressed into uneven parts of the overlapping surfaces, which spreading can be improved by moving two adjacent surfaces relative to each other during or after the joining process. Such a relative movements can be achieved by means of rotating and/or repeatedly sliding surfaces relative to each other. The sealant is preferably applied onto either of the adjacent surfaces by means of a depositing or growth process such as a galvanizing process. Such a process allows for accurately depositing a thin layer or a labyrinth of material suitable for the purpose of sealing a very narrow closure, which is present between the adjacent surfaces in the embodiment.

Several additional features described in connection with other embodiments are also applicable in this embodiment.

Although not shown here, very good results have been obtained with the electroplated sealing layer. It is not excluded that this electroplated sealing layer is also applicable in other configurations of fluid containing cells, and that not for all applications a cell with both an inner wall 80 and an outer wall 90 and an extension 85,86. It is further understood, that the extensions 85, 86 of the outer wall 80 extending at the first and second side 111, 112 are not separate elements, but either protrusions to parts or connections grown or deposited. Particularly, an electroplated connection may be effective as such an extension 86.

## Claims

1. An electrowetting cell (15) comprising:
- a body section (17) provided with a substrate (6) joinable with at least one side wall (80,90), which substrate and side wall jointly define a cavity containing electrowetting fluids (51,52) and further comprising
- at least one end section (4) securable to the body section, wherein the at least one side wall (80,90) of the body section (17) comprises an inner wall (80) and an outer wall (90), wherein a portion (81) of which end section (4) is part of the inner wall (80), the outer wall securing the end section (4) and the body section (17) by means of extensions extending at a first (111) and a second (112) side of the outer wall (90) over opposed sides of the inner wall and further comprising
- a strengthening layer (95), such as a layer produced by means of electroplating or an epoxy based layer, that is applied on at least the connection between the inner wall and the outer wall.

2. An electrowetting cell as claimed in claim 1, wherein the inner wall (80) comprises a portion (61) of the substrate (6).

3. An electrowetting cell as claimed in claim 2, wherein the inner wall further comprises a spacer (8) of an electrically insulating material between said portion (61) of the substrate and said portion (81) of the end section.

4. An electrowetting cell as claimed in claim 1, wherein the extension of the outer wall extending at the first side of the inner wall is a clamping body (86) that is attached to the outer wall (90).

5. An electrowetting cell as claimed in claim 4, wherein the clamping body is attached to the outer wall by means of a metal layer (95) that is grown on the extension and on the outer wall.

6. An electrowetting cell as claimed in claim 1, wherein a first and a second electrode (2,8) that are in contact with at least one of the electrowetting fluids are defined at opposed sides of the cavity at the substrate and at the end section.

7. An electrowetting cell as claimed in claim 6, wherein the substrate is provided with an aperture (62), at an end of which said electrode (2) is present.

8. An electrowetting cell as claimed in claim 1, wherein the end section comprises a flexible membrane (45) allowing for volume expansion of the closed cavity.

9. An electrowetting cell as claimed in claim 2, wherein the extension (12) at the second side of the inner wall is attached to the substrate through a metal layer (95) that is grown on both.

10. An electrowetting cell as claimed in any of the claims 1-9, comprising an overlapping part of the outer wall and in the inner wall or the substrate or end section, wherein in the overlapping part at least one of the adjacent surfaces comprises a sealant (91,11,13) for sealing the overlapping part when it is under pressure in an assembled state.

11. An electrowetting cell as claimed in claim 10, wherein the sealant comprises an organic composite, such as a composite comprising a plastic or rubber.

12. An electrowetting cell as claimed in claim 10, wherein the sealant has electrically conductive properties.

13. An electrowetting cell as claimed in claim 10, wherein the sealant comprises a nickel-PTFE composite, such as niflon.

14. An electrowetting cell as claimed in claim 10, wherein in the sealant is applied by means of a depositing or growth process.

15. A method of manufacturing an electrowetting cell comprising a body section (17) provided with a substrate (6) and a side wall (80,90) having an inner wall (80) and an outer wall (90), said outer wall being provided with a first (111) and a second (112) extension extending at opposed sides of the inner wall, which substrate and side wall jointly define a cavity containing a first and a second electrowetting fluid (51,52), which method comprises the steps of:
- providing an outer wall and a substrate, resulting in the cavity;
- filling the cavity with the first and the second electrowetting fluid;
- providing an end section (4) in the cavity such that it is immersed in at least one of the fluids at a desired distance to the substrate, portions of the substrate and the end section and optionally an intermediate spacer forming the inner wall;
- securing the end section to the body section in that the first extension of the outer wall is positioned on top of the end section, and
- applying a strengthening layer (95), such as a layer produced by means of electroplating or an epoxy based layer, on at least the connection between the inner wall and the outer wall.

16. A method as claimed in claim 15, wherein the extension is a separate clamping body (86) that is connected to the outer wall only after having been positioned on the end section.

17. A method as claimed in claim 16, wherein the clamping body and the outer wall are connected with the strengthening layer (95) which is a metal layer grown on their surfaces.

18. An image capture device or an image sensor incorporating an electrowetting cell as claimed in any one of claims 1 to 14.

19. An optical scanning device comprising an electrowetting cell as claimed in any of the claims 1 to 14.

20. A display device incorporating an electrowetting cell as claimed in any one of claims 1 to 14.

## Patentansprüche

1. Elektrobenetzungszelle (15) mit
- einem Körperabschnitt (17), der mit einem Substrat (6) versehen ist, das mit zumindest einer Seitenwand (80, 90) verbindbar ist, wobei das Substrat und die Seitenwand gemeinsam einen Hohlraum definieren, der Elektrobenetzungsfluide (51, 452) enthält, und weiter mit
- zumindest einem Endabschnitt (4), der an dem Körperabschnitt befestigt werden kann, worin die zumindest eine Seitenwand (80, 90) des Körperabschnitts (17) eine Innenwand (80) und eine Außenwand (90) umfasst, worin ein Abschnitt (81) dieses Endabschnitts (4) Teil der Innenwand (80) ist, wobei die Außenwand den Endabschnitt (4) und den Körperabschnitt (17) mit Hilfe von Fortsätzen, die an einer ersten (111) und einer zweiten (112) Seite der Außenwand (90) über gegenüberliegende Seiten der Innenwand verlaufen, befestigt, und weiter mit
- einer Verstärkungsschicht (95), wie z. B. eine mittels Galvanisieren erzeugte Schicht oder eine auf Epoxid basierte Schicht, die auf zumindest der Verbindung zwischen der Innenwand und der Außenwand aufgebracht ist.

2. Elektrobenetzungszelle nach Anspruch 1, bei der die Innenwand (80) einen Abschnitt (61) des Substrats (6) umfasst.

3. Elektrobenetzungszelle nach Anspruch 2, bei der die Innenwand weiterhin ein Abstandsstück (8) aus einem elektrisch isolierenden Material zwischen dem genannten Abschnitt (61) des Substrats und dem genannten Abschnitt (81) des Endabschnitts umfasst.

4. Elektrobenetzungszelle nach Anspruch 1, bei der der an der ersten Seite der Innenwand verlaufende Fortsatz der Außenwand ein Klemmkörper (86) ist, der an der Außenwand (90) angebracht ist.

5. Elektrobenetzungszelle nach Anspruch 4, bei der der Klemmkörper an der Außenwand mittels einer Metallschicht (95) angebracht ist, die auf dem Fortsatz und auf der Außenwand aufgewachsen ist.

6. Elektrobenetzungszelle nach Anspruch 1, bei der eine erste und eine zweite Elektrode (2, 8), die mit zumindest einem der Elektrobenetzungsfluide in Kontakt sind, auf gegenüberliegenden Seiten des Hohlraums beim Substrat und beim Endabschnitt definiert sind.

7. Elektrobenetzungszelle nach Anspruch 6, bei der das Substrat mit einer Öffnung (62) versehen ist, an deren Ende sich die genannte Elektrode (2) befindet.

8. Elektrobenetzungszelle nach Anspruch 1, bei der der Endabschnitt eine flexible Membran (45) umfasst, die eine Volumenausdehnung des geschlossenen Hohlraums zulässt.

9. Elektrobenetzungszelle nach Anspruch 2, bei der der sich an der zweiten Seite der Innenwand befindende Fortsatz (12) an dem Substrat mittels einer Metallschicht (95) angebracht ist, die auf beiden aufgewachsen ist.

10. Elektrobenetzungszelle nach Anspruch 1-9, mit einem überlappenden Teil der Außenwand und in der Innenwand oder dem Substrat oder Endabschnitt, bei der in dem überlappenden Teil zumindest eine der benachbarten Flächen ein Dichtungsmaterial (91, 11, 13) umfasst, um den überlappenden Teil abzudichten, wenn er in montiertem Zustand unter Druck steht.

11. Elektrobenetzungszelle nach Anspruch 10, bei der das Dichtungsmaterial einen organischen Verbundwerkstoff umfasst, wie z. B. einen Verbundwerkstoff, der einen Kunststoff oder Gummi umfasst.

12. Elektrobenetzungszelle nach Anspruch 10, bei der das Dichtungsmaterial elektrische Leitfähigkeitseigenschaften hat.

13. Elektrobenetzungszelle nach Anspruch 10, bei der das Dichtungsmaterial einen Nickel-PTFE-Verbundwerkstoff umfasst, wie z. B. Niflon.

14. Elektrobenetzungszelle nach Anspruch 10, bei der das Dichtungsmaterial mittels Abscheidung oder Aufwachsen aufgebracht ist.

15. Verfahren zur Herstellung einer Elektrobenetzungszelle, die einen Körperabschnitt (17) umfasst, der mit einem Substrat (6) versehen ist, und eine Seitenwand (80, 90), die eine Innenwand (80) und eine Außenwand (90) hat, wobei die Außenwand mit einem ersten (111) und einem zweiten (112) Fortsatz versehen ist, die an gegenüberliegenden Seiten der Innenwand verlaufen, wobei das Substrat und die Seitenwand gemeinsam einen Hohlraum definieren, der ein erstes und ein zweites Elektrobenetzungsfluid (51, 52) enthält, wobei das Verfahren die folgenden Schritte umfasst:
- Bereitstellen einer Außenwand und eines Substrats, was den Hohlraum ergibt;
- Füllen des Hohlraums mit dem ersten und dem zweiten Elektrobenetzungsfluid;
- Bereitstellen des Endabschnitts (4) in dem Hohlraum, sodass er in zumindest eines der Fluide in einem gewünschten Abstand zum Substrat eingetaucht wird, wobei Anteile des Substrats und der Endabschnitt und optional ein dazwischen liegendes Abstandsstück die Innenwand bilden;
- Befestigen des Endabschnitts am Körperabschnitt, indem der erste Fortsatz der Außenwand oben auf dem Endabschnitt positioniert wird und
- Aufbringen einer Verstärkungsschicht (95), wie z. B. eine mittels Galvanisieren erzeugte Schicht oder eine auf Epoxid basierte Schicht, auf zumindest der Verbindung zwischen der Innenwand und der Außenwand.

16. Verfahren nach Anspruch 15, bei dem der Fortsatz ein separater Klemmkörper (86) ist, der erst mit der Außenwand verbunden wird, nachdem er auf dem Endabschnitt positioniert worden ist.

17. Verfahren nach Anspruch 16, bei dem der Klemmkörper und die Außenwand mit der Verstärkungsschicht (95) verbunden sind, die eine auf deren Oberflächen aufgewachsene Metallschicht ist.

18. Bildaufnahmeeinrichtung oder Bildsensor, eine Elektrobenetzungszelle nach einem der Ansprüche 1 bis 14 enthaltend.

19. Optische Abtasteinrichtung mit einer Elektrobenetzungszelle nach einem der Ansprüche 1 bis 14.

20. Anzeigeeinrichtung, die eine Elektrobenetzungszelle nach einem der Ansprüche 1 bis 14 enthält.

## Revendications

1. Cellule de mouillage électrique (15) comprenant:
- une section de corps (17) étant pourvue d'un substrat (6) qui est susceptible d'être assemblé avec au moins une paroi latérale (80, 90), lequel substrat et laquelle paroi latérale définissent conjointement une cavité contenant des fluides de mouillage électrique (51, 52), et comprenant encore
- au moins une section d'extrémité (4) qui est susceptible d'être fixée à la section de corps dans laquelle l'au moins une paroi latérale (80, 90) de la section de corps (17) comprend une paroi intérieure (80) et une paroi extérieure (90) dans laquelle une partie (81) de ladite section d'extrémité (4) fait partie de la paroi intérieure (80), la paroi extérieure fixant la section d'extrémité (4) et la section de corps (17) au moyen d'extensions s'étendant vers un premier (111) et un deuxième (112) côté de la paroi extérieure (90) pardessus les côtés opposés de la paroi intérieure, et comprenant encore
- une couche de renforcement (95), telle qu'une couche qui est produite au moyen de métallisation électrolytique ou une couche à base d'époxyde qui est appliquée sur au moins la connexion entre la paroi intérieure et la paroi extérieure.

2. Cellule de mouillage électrique selon la revendication 1, dans laquelle la paroi intérieure (80) comprend une partie (61) du substrat (6).

3. Cellule de mouillage électrique selon la revendication 2, dans laquelle la paroi intérieure comprend encore une entretoise (8) constituée d'un matériau électriquement isolant entre ladite partie (61) du substrat et ladite partie (81) de la section d'extrémité.

4. Cellule de mouillage électrique selon la revendication 1, dans laquelle l'extension de la paroi extérieure s'étendant vers le premier côté de la paroi intérieure est un corps de serrage (86) qui est fixé à la paroi extérieure (90).

5. Cellule de mouillage électrique selon la revendication 4, dans laquelle le corps de serrage est fixé à la paroi extérieure au moyen d'une couche métallique (95) qui est formée par croissance sur l'extension et sur la paroi extérieure.

6. Cellule de mouillage électrique selon la revendication 1, dans laquelle une première et une deuxième électrode (2, 8) qui sont en contact avec au moins un des fluides de mouillage électrique sont définies à des côtés opposés de la cavité et à la section d'extrémité.

7. Cellule de mouillage électrique selon la revendication 6, dans laquelle le substrat est pourvu d'une ouverture (62) dont à une extrémité ladite électrode (2) est présente.

8. Cellule de mouillage électrique selon la revendication 1, dans laquelle la section d'extrémité comprend une membrane flexible (45) permettant une expansion de volume de la cavité fermée.

9. Cellule de mouillage électrique selon la revendication 2, dans laquelle l'extension (12) à l'endroit du deuxième côté de la paroi intérieure est fixée au substrat à travers une couche métallique (95) qui est formée par croissance sur les deux.

10. Cellule de mouillage électrique selon l'une quelconque des revendications précédentes 1 à 9, comprenant une partie chevauchante de la paroi extérieure et dans la paroi intérieure ou le substrat ou la section d'extrémité dans laquelle dans la partie chevauchante au moins une des surfaces adjacentes comprend un scellant (91, 11, 13) pour sceller la partie chevauchante lorsqu'elle est sous pression dans un état assemblé.

11. Cellule de mouillage électrique selon la revendication 10, dans laquelle le scellant comprend un matériau composite organique, tel qu'un matériau composite comprenant une matière plastique ou un caoutchouc.

12. Cellule de mouillage électrique selon la revendication 10, dans laquelle le scellant présente des propriétés électriquement conductrices.

13. Cellule de mouillage électrique selon la revendication 10, dans laquelle le scellant comprend un matériau composite constitué de nickel et de PTFE, tel que du niflon.

14. Cellule de mouillage électrique selon la revendication 10, dans laquelle le scellant est appliqué au moyen d'un processus de dépôt ou de formation par croissance.

15. Procédé de fabrication d'une cellule de mouillage électrique comprenant une section de corps (17) qui est pourvue d'un substrat (6) et une paroi latérale (80, 90) ayant une paroi intérieure (80) et une paroi extérieure (90), ladite paroi extérieure étant pourvue d'une première (111) et d'une deuxième (112) extension s'étendant vers les côtés opposés de la paroi intérieure, lequel substrat et laquelle paroi latérale définissent conjointement une cavité contenant un premier et un deuxième fluide de mouillage électrique (51, 52), lequel procédé comprend les étapes consistant à:
- fournir une paroi extérieure et un substrat, ce qui aboutit à la cavité;
- remplir la cavité du premier et du deuxième fluide de mouillage électrique;
- fournir une section d'extrémité (4) dans la cavité de telle façon qu'elle soit immergée dans au moins un des fluides à une distance souhaitée du substrat, des parties du substrat et la section d'extrémité et optionnellement une entretoise intermédiaire constituant la paroi intérieure;
- fixer la section d'extrémité à la section de corps en ce que la première extension de la paroi extérieure est positionnée en haut de la section d'extrémité, et
- appliquer une couche de renforcement (95), telle qu'une couche qui est produite au moyen de métallisation électrolytique ou une couche à base d'époxyde, sur au moins la connexion entre la paroi intérieure et la paroi extérieure.

16. Procédé selon la revendication 15, dans lequel l'extension est un corps de serrage séparé (86) qui est relié à la paroi extérieure seulement après avoir été positionné sur la section d'extrémité.

17. Procédé selon la revendication 16, dans lequel le corps de serrage et la paroi extérieure sont reliés à la couche de renforcement (95) étant une couche métallique qui est formée par croissance sur leurs surfaces.

18. Dispositif de captage d'image ou capteur d'image incorporant une cellule de mouillage électrique selon l'une quelconque des revendications précédentes 1 à 14.

19. Dispositif de balayage optique comprenant une cellule de mouillage électrique selon l'une quelconque des revendications précédentes 1 à 14.

20. Dispositif d'affichage incorporant une cellule de mouillage électrique selon l'une quelconque des revendications précédentes 1 à 14.
